(19) Europäisches Patentamt
European Patent Office
Office européen des brevets

(11) Veröffentlichungsnummer: **0 208 963 B1**

(12) # EUROPÄISCHE PATENTSCHRIFT

(45) Veröffentlichungstag der Patentschrift: **24.07.91**

(51) Int. Cl.$^5$: **C08L 83/04**

(21) Anmeldenummer: **86108698.1**

(22) Anmeldetag: **26.06.86**

(54) **RTV-Siliconpasten mit verkürzter Aushärtungszeit.**

(30) Priorität: **09.07.85 DE 3524452**

(43) Veröffentlichungstag der Anmeldung:
**21.01.87 Patentblatt 87/04**

(45) Bekanntmachung des Hinweises auf die Patenterteilung:
**24.07.91 Patentblatt 91/30**

(84) Benannte Vertragsstaaten:
**BE DE FR GB IT NL**

(56) Entgegenhaltungen:
**EP-A- 0 050 453**
**EP-A- 0 138 103**
**DE-A- 3 143 705**
**GB-A- 2 026 512**
**GB-A- 2 059 979**

(73) Patentinhaber: **BAYER AG**

**W-5090 Leverkusen 1 Bayerwerk(DE)**

(72) Erfinder: **Würminghausen, Thomas, Dr.**
**Christian-Hess-Strasse 65**
**W-5090 Leverkusen 1(DE)**
Erfinder: **Sattlegger, Hans, Dr.**
**Auf dem Heidchen 9**
**W-5068 Odenthal(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Erfindung betrifft Einkomponenten-Siliconpasten, die im Kontakt mit der Luftfeuchtigkeit unter Abspaltung von Oximen aushärten, gut auf vielen Untergründen haften und eine kurze Vulkanisationszeit aufweisen.

Eine der bekannten Methoden, feuchtigkeitshärtende Siliconpasten herzustellen, beruht auf der Verwendung von Oximinosilanen. Silane dieser Art wurden in der US-PS 3 289 576 beschrieben. Man vermischt α,ω-Dihydroxypolydimethylsilane mit dem jeweiligen Oximinosilan und gegebenenfalls einem oder mehreren Füllstoffen. Auf diese Weise erhält man Systeme, die unter Ausschluß von Luftfeuchtigkeit gelagert werden können und die unter dem Einfluß der Luftfeuchtigkeit zu einem Elastomer aushärten, sogenannte Oximsysteme.

Es ist weiterhin bekannt geworden, daß man die Vernetzung von Oximsystemen durch Metallkatalysatoren, insbesondere Dialkylzinndicarboxylate beschleunigen kann. Für die Anwendung als Dichtstoff ist außerdem die Verwendung von Aminoalkylalkoxysilanen, beispielsweise

$H_2N\ CH_2CH_2CH_2\ Si(OC_2H_5)_3$ oder $H_2N\ CH_2CH_2\ NH\ CH_2CH_2CH_2$
$Si(OC_2H_5)_3$ beschrieben worden. Solche Silane verbessern

die Haftung auf vielen Untergründen. Systeme, die aus α,ω-Dihydroxypolydimethylsiloxanen, Oximinosilanen, Aminoalkylalkoxysilanen, Zinnkatalysatoren und Füllstoffen hergestellt werden, sind Gegenstand der japanischen Patentanmeldung 46-11272.

Die genannten Methoden zur Herstellung von feuchtigkeitshärtenden Oximsystemen weisen Nachteile auf. Dies gilt besonders dann, wenn gute Haftung zum Untergrund und gleichzeitig rasche Vulkanisation gefordert sind. So erreicht man ohne Zinnkatalysatoren zwar gute Haftung, aber meist nur unzureichende Vulkanisationsgeschwindigkeit. Umgekehrt führt die Zugabe von Zinnkatalysatoren zwar zu rasch vulkanisierenden Produkten, bewirkt aber gleichzeitg Einbußen bei den Haftungseigenschaften. Dieser Nachteil läßt sich durch Aminoalkylalkoxysilane ausgleichen, die sich jedoch wieder negativ auf die Vernetzungsgeschwindigkeit auswirken. Auf diese Weise hergestellte Produkte genügen nicht immer den Anforderungen der Praxis. Bei niedriger Umgebungstemperatur härten sie oft zu langsam aus. Es bestand deshalb die Aufgabe, ein Oximsystem mit kürzerer Aushärtungszeit zu finden, das gleichzeitig gute Hafteigenschaften aufweist.

Gegenstand der vorliegenden Erfindung sind unter Ausschluß von Feuchtigkeit lagerfähige und bei Zutritt von Feuchtigkeit härtende Polyorganosiloxanmassen, erhältlich durch Vermischen von

(1) 100 Gew.-Tln. eines α,ω-Dihydroxypolydimethylsiloxansmit einer Viskosität zwischen 0,1 und 1000 Pas,

(2) 0 bis 100 Gew.-Tln. eines α,ω-Bis(trimethylsiloxy)polydimethylsiloxans mit einer Viskosität zwischen 0,01 und 10 Pas als Weichmacher,

(3) 1 bis 10 Gew.-Tln. einer Oximinosilans der Zusammensetzung

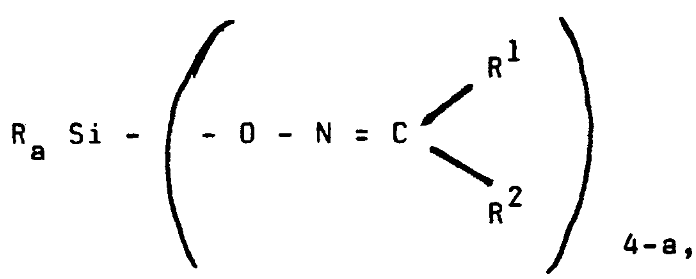

wobei R Alkyl oder Alkenylreste mit 1 bis 4 C-Atomen sind, $R^1$ und $R^2$ jeweils ein Alkylrest mit 1 bis 4 C-Atomen oder Wasserstoff sein kann oder $R^1$ und $R^2$ zusammen einen Alkylenrest mit 4 oder 5 C-Atomen bedeuten und wobei a die Werte 0 oder 1 annehmen kann,

(4) 5 bis 250 Gew.-Tln. eines verstärkenden oder eines nicht verstärkenden Füllers oder eines Füllstoffgemisches,

(5) 0,01 bis 1 Gew.-Tl. eines Zinnkatalysators und

(6) 0,05 bis2,5 Gew.-Tln. eines Aminoalkylalkoxysilans das einen oder mehrere über C-Atome, vorzugsweise mindestens 3 C-Atome mit einem Silicium verbundene basische Stickstoffatome enthält, welche dadurch gekennzeichnet sind, daß man 0,05 bis 2,5 Gew.-Teile eines die Vulkanisation beschleunigenden Hilfsstoffs (7) verwendet, der ausgewählt ist aus der Reihe:

a) der Alkyl-oder Alkenylcarbonsäuren mit bis zu 20 C-Atomen, die gegebenenfalls substituiert sein können und

b) der Silanderivate solcher Carbonsäuren mit der Zusammensetzung

$$R^3_b\ Si(O\overset{O}{\overset{\|}{C}} - R^4)_{4-b},$$

wobei $R^3$ Alkyl- oder Alkenylreste mit bis zu 4 C-Atomen umfaßt, $R^4$ der Definition unter a) entspricht und b die Werte 0 bis 3 annehmen kann.

Überraschenderweise wurde gefunden, daß die Verneutzung von Systemen, die aus den Bestandteilen (1) bis (6) erhalten werden, durch den Zusatz einer kleinen Menge einer Carbonsäure (7a) beschleunigt wird. Die gleiche Wirkung erzielt man durch die Zugabe von Verbindungen wie Carboxylatosilanen (7b), aus denen während der Herstellung der Pasten oder im Verlauf der Vernetzung Carbonsäuren entstehen können. Die für das Erreichen der erfindungsgemäßen Vulkanisationsbeschleunigung notwendigen Carboxylatmengen sind so klein, daß das System unverändert die Eigenschaften eines Neutralsystems besitzt.

Eine Beeinträchtigung der Haftungseigenschaften ist mit der beschleunigten Vernetzung nicht verbunden.

Die als die Bestandteile (1) und (2) genannten Polydimethylsiloxane mit Hydroxy- bzw. Trimethylsiloxy-Endgruppen sind bekannt und handelsüblich. Darüber hinaus sollte sich die Erfindung auch auf Polysiloxane anwenden lassen, die neben Methylresten noch andere Subsituenten, beispielsweise Phenylgruppen, enthalten. Ebenso können Weichmacher wie z.B. Paraffine und/oder Isoparaffine zugesetzt werden.

Als Oximinosilane (3) eignen sich Verbindungen wie

$CH_3Si\,[O\,N = C(C_2H_5)\,CH_3]_3$, $CH_2 = CH\,Si\,[O\,N = C(C_2H_5)\,CH_3]_3$, $CH_3Si\,[O\,N = C(CH_3)_2]_3$, $C_2H_5\,Si(O\,N = C\,H\,CH_3)_3$, $Si[O\,N = C(C_2H_5)_2]_4$ und

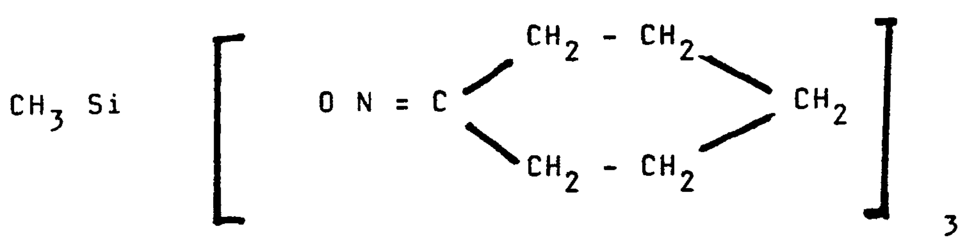

Die Substanzen und deren Herstellung wurden in der US-PS 3 189 576 beschrieben.

Als Füllstoffe (4) kommen verstärkende Füllstoffe wie pyrogene und gefällte Kieselsäure und nicht oder wenig verstärkende mineralische Materialien wie Carbonate (Kreide, Dolomit), Silicate (Ton, Schiefermehl, Glimmer, Talc, Wollastonit), $SiO_2$ (Quarz, Diatomeenerde) sowie Ruß in Frage.

Als Zinnkatalysatoren (5) eignen sich Dialkylzinn(IV)-Verbindungen, insbesondere Dialkylzinn(IV)-dicarboxylate, beispielsweise Dibutylzinndilaurat, Dibutylzinndiacetat, Dioctylzinndiacetat, Dioctylzinnmaleinat oder Dibutylzinndi-2-ethylhexanoat. Auch andere Dialkylzinnverbindungen wie Dialkylzinnoxide oder Dialkylzinndialkoxide können verwandt werden ohne, daß sich daraus ein Vorteil ergibt.

Als Aminoalkylalkoxysilane (6) eignen sich Verbindungen wie $H_2N\,CH_2\,CH_2\,CH_2\,Si(O\,C_2H_5)_3$ und $H_2\,N\,CH_2\,CH_2\,NH\,CH_2CH_2CH_2\,Si\,(O\,CH_3)_3$, die im Handel erhältlich sind. Es können jedoch auch andere Aminoalkylalkoxysilane zur Herstellung der erfindungsgemäßen Massen benutzt werden. Eine Vielzahl solcher Verbindungen ist als Haftmittel oder als Vernetzer für Siliconsysteme beschrieben worden, als Beispiel hierfür kann die US-PS 3 888 815 genannt werden.

Als Carbonsäuren (7a) können alle Carbonsäuren verwendet werden, die sich gut im Siliconsystem verteilen lassen. Deshalb sind flüssige oder niedrig schmelzende Säuren bevorzugt. Beispiele sind Alkylcarbonsäuren mit 1 bis 20 C-Atomen wie Essigsäure, Propionsäure, Valeriansäure, Caprylsäure, Myristinsäure, Pivalinsäure und 2-Ethylhexansäure. Säuren wie die letztgenannte sind bevorzugt, vor allem, weil sie keine Geruchsbelästigung verursachen. Auch ungesättigte Säuren wie Ölsäure oder Linolensäure üben einen beschleunigenden Einfluß auf die Vulkanisation aus. Auch Verbindungen vom Typ $HOOC-(CH_2)_2-$ Si(Ra)-$(OR_3)_{3-a}$ können eingesetzt werden.

Als Carboxylatosilane (7b) können Silane wie $CH_3$ Si(O C O $CH_3)_3$, $C_2H_5$ Si(OCO $CH_3)_3$, Si (O C O $CH_3)_4$ oder $CH_3$ Si [ O C O $CH(C_2H_5)$ $C_4H_9$]$_3$ eingesetzt werden. Die Silane können außer Carboxylatresten auch andere funktionelle Reste tragen, beispielsweise Alkoxyreste. Für die Funktionsweise als beschleunigender Zusatz ist dies jedoch nicht von Belang. Die Herstellung der erfindungsgemäßen Massen erfordert keine neuartigen Verfahrensschritte. Wie bei feuchtigkeitshärtenden Siliconpasten üblich, können die Rohstoffe in Planetenmischern, Butterfly-Mischern, Dissolvern, kontinuierlich arbeitenden Mischschnecken oder anderen für die Pastenherstellung geeigneten Geräten vermischt werden. Die Produkte werden in verschlossene Gebinde, beispielsweise Kartuschen, abgefüllt. Beim Herstellungsprozeß muß Kontakt mit der Luftfeuchtigkeit so weit wie möglich vermieden werden.

Die folgenden Beispiele sollen die Erfindung näher erläutern.

## Beispiel 1

59 Gew.-Tle. eines $\alpha$ ,$\omega$-Dihydroxypolydimethylsiloxans der Viskosität 50 Pa•s und 22 Gew.-Tle eine $\alpha$ ,$\omega$-Bis(trimethylsiloxy)polydimethylsiloxans der Viskosität 0,1 Pa•s wurden in einem Planetenmischer mit 5,7 Gew.-Tln. $CH_3Si$ [ON = $C(C_2H_5)CH_3]_3$ und mit 7,5 Gew.-Tln. einer hydrophobierten pyrogenen Kieselsäure (BET-Oberfläche 110 $m^2/g$) vermischt. Danach wurden

0,6 Gew.-Tle. $H_2N$ $CH_2CH_2CH_2$ Si(O $C_2H_5)_3$,
0,3 Gew.-Tle. Dibutylzinndilaurat und
0,3 Gew.-Tle. Methyltriacetoxysilan

zugegeben.

Zur Bestimmung der Vernetzungsgeschwindigkeit wurde eine Probe der Paste mit 1,2 % einer Emulsion von 58 % Wasser in Siliconöl vermischt und die Shore A Härte dieser Mischung in Abhängigkeit von der Zeit bestimmt. Als Maß für die Vernetzungsgeschwindigkeit wurde die Zeit genommen, die das Emulsion enthaltende System bei 25°C benötigte, um eine Härte von 5 Shore A zu erreichen. Das vorliegende erfindungsgemäße System benötigte dazu 7 Stunden.

## Beispiel 2 (Vergleich)

Es wurde wie in Beispiel 1 verfahren, aber das $CH_3Si$ (O C O $CH_3)_3$ weggelassen. In diesem Fall benötigte die mit Emulsion versetzte Paste 23 Stunden, um eine Härte von 5 Shore A zu erreichen.

Die Prüfung der mechanischen Festigkeit ergab nach 7-tägiger Aushärtung bei 25°C und 50 % rel. Luftfeuchtigkeit die folgenden Werte:

| | |
|---|---|
| Härte : | 23 Shore A |
| E-Modul : | 0,42 $N/mm^2$ |
| Reißfestigkeit : | 1,4 $N/mm^2$ |
| Bruchdehnung : | 460 % |

Der Dichtstoff wurde außerdem in Form von etwa 1 cm dicken Strängen auf Glas-, Kachel-, Aluminium-, Hart-PVC- und Polycarbonatplatten aufgetragen. Nach 7 Tagen Aushärtung wurde geprüft, ob der Dichtstoff adhäsiv vom Untergrund abriß. Dies war bei keinem der Untergründe der Fall. Eine zweite Reihe von vergleichbaren Prüfplatten wurde nach dem Aushärten des Dichtstoffes 1 Woche lang bei Raumtemperatur unter Wasser gelagert . Auch nach dieser Wasserbelastung wurde kein adhäsives Abreißen beobachtet.

## Beispiel 3

Der in Beispiel 1 beschriebene Ansatz wurde wiederholt, aber anstatt des Methyltriacetoxysilans verschiedene Carbonsäuren verwendet. In Tabelle 1 sind die verwendeten Carbonsäuren und die davon eingesetzten Mengen aufgeführt. Als Maß für die vernetzungsgeschwindigkeit ist wieder die Zeit angegeben, die das System nach dem Einmischen von 1,2 % der im Beispiel 1 verwendeten Emulsion benötigt, um eine Härte von 5 Shore A zu erreichen. Alle Zeiten sind deutlich kürzer als im Vergleichsbeispiel 2.

Tabelle 1

| Carbonsäure | Gew.-Teile Carbonsäure auf die in Beispiel 1 angegebene Rezeptur ohne $CH_3Si(OCOCH_3)_3$ | $t_5$ Shore A (Stunden) |
|---|---|---|
| Linolsäure | 0,58 | 7 |
| Cyclohexen-3-carbonsäure | 0,26 | 13 |
| Ethoxyessigsäure | 0,22 | 7 |
| Dichloressigsäure | 0,27 | 2 |
| Pivalinsäure | 0,21 | 8 |
| 2-Ethylhexansäure | 0,30 | 7 |

Beispiel 4

Es wurde wie in Beispiel 1 verfahren, aber das Methyltriacetoxysilan durch 0,30 Gew.-Tle $CH_3Si[OCOCH(C_2H_5)C_4H_9]_3$ ersetzt. Nach 7-tägiger Aushärtung bei 23 °C und 50 % relativer Luftfeuchtigkeit wurden

die folgenden mechanischen Eigenschaften gefunden:

| | |
|---|---|
| Härte | : 24 Shore A |
| E-Modul | : 0,41 $N/mm^2$ |
| Reißfestigkeit | : 1,3 $N/mm^2$ |
| Bruchdehnung | : 430 % |

Die Haftung wurde wie in Beispiel 2 geprüft. In keinem Fall, auch nach 7-tägiger Wasserlagerung, wurde adhäsives Abreißen beobachtet.

Nach dem Vermischen mit der Emulsion von Wasser in Siliconöl, wie in Beispiel 2, benötigte der Dichtstoff bei 25 °C 13 Stunden, um eine Härte von 5 Shore A zu erreichen.

## Patentansprüche

1. Unter Ausschluß von Feuchtigkeit lagerfähige und bei Zutritt von Feuchtigkeit härtende Polyorganosiloxanmassen, erhältlich durch Vermischen von

   (1) 100 Gew.-Teilen eines α, ω-Dihydroxypolydimethylsiloxans mit einer Viskosität zwischen 0,1 und 1000 Pas,

   (2) 0 bis 100 Get.-Teilen eines α, ω-Bis(trimethylsiloxy)polydimethylsiloxans mit einer Viskosität zwischen 0,0 1 und 10 Pas als Weichmacher,

   (3) 1 bis 10 Gew.-Teilen eines Oximinosilans der Zusammensetzung

$$R_a\,Si - \left[ - O - N = C \begin{matrix} R^1 \\ \\ R^2 \end{matrix} \right]_{4-a},$$

   wobei R Alkyl oder Alkenylreste mit 1 bis 4 C-Atomen sind, $R^1$ und $R^2$ jeweils unabhängig von einander ein Alkylrest mit 1 bis 4 C-Atomen oder Wasserstoff sein kann oder $R^1$ und $R^2$ zusammen einen Alkylenrest mit 4 oder 5 C-Atomen bedeuten und wobei a die Werte 0 oder 1 annehmen kann,

   (4) 5 bis 250 Gew.-Teilen eines verstärkenden oder eines nicht verstärkenden Füllstoffes oder eines Füllstoffgemisches,

   (5) 0,01 bis 1 Gew.-Teile eines Zinnkatalysators und

   (6) 0,05 bis 2,5 Gew.-Teile eines Aminoalkylalkoxysilans, das einen oder mehrere über mindestens 3 C-Atome mit dem Silicium verbundene basische Stickstoffatome enthält,

   dadurch gekennzeichnet, daß man 0,05 bis 2,5 Gew.-Teile eines die Vernetzung beschleunigenden Hilfsstoffs (7) verwendet, der ausgewählt ist aus der Reihe:

   a) der Alkyl-oder Alkenylcarbonsäuren mit bis zu 20 C-Atomen, die gegebenenfalls substituiert sein können und

   b) der Silanderivate solcher Carbonsäuren mit der Zusammensetzung

$$R^3{}_b\;Si(O\overset{\overset{O}{\|}}{C} - R^4)_{4-b},$$

   wobei $R^3$ Alkyl- oder Alkenylreste mit bis zu 4 C-Atomen umfaßt, $R^4$ der Definition unter a) entspricht und b die Werte 0 bis 3 annehmen kann.

2. Masse nach Anspruch 1, dadurch gekennzeichnet, daß als Oximinosilan (3) $CH_3Si\,[ON = C(C_2H_5)\text{-}CH_3]_3$ eingesetzt wird.

3. Masse nach Anspruch 2, dadurch gekennzeichnet, daß als Aminoalkylalkoxysilan (6) $H_2N\,CH_2CH_2CH_2\,Si(OC_2H_5)_3$ oder $H_2N\,CH_2CH_2CH_2\,Si\,(OCH_3)_3$ verwendet wird.

4. Masse nach Anspruch 2, dadurch gekennzeichnet, daß als Aminoalkylalkoxysilan (6) $H_2N\ CH_2CH_2\ NH\ CH_2CH_2CH_2Si\ (OCH_3)_3$ verwendet wird.

5. Masse nach Anspruch 3 oder 4, dadurch gekennzeichnet, daß als die Vernetzung beschleunigender Zusatz 2-Ethylhexansäure verwendet wird.

6. Masse nach Anspruch 3 oder 4, dadurch gekennzeichnet, daß als die Vernetzung beschleunigender Zusatz

$$CH_3Si\left[O\underset{\underset{O}{\|}}{C} - CH(C_2H_5)\ C_4H_9\right]_3$$

verwendet wird.

**Claims**

1. Polyorganosiloxane compounds which can be stored with exclusion of moisture and are cured by access of moisture, obtainable by mixing
   (1) 100 parts by weight of an $\alpha$, $\omega$-dihydroxy polydimethylsiloxane having a viscosity of from 0.1 to 1000 Pas,
   (2) from 0 to 100 parts by weight of an $\alpha$, $\omega$-bis(trimethylsiloxy)-polydimethylsiloxane having a viscosity of from 0.01 to 10 Pas as plasticizer,
   (3) from 1 to 10 parts by weight of an oximinosilane having the following composition

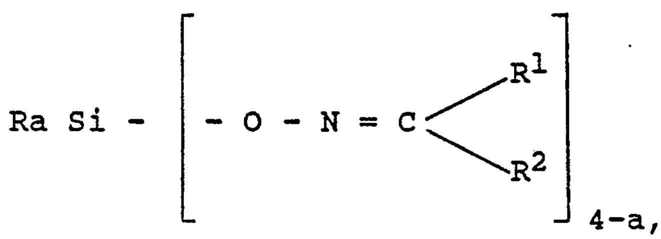

   wherein R denotes alkyl or alkenyl groups having 1 to 4 carbon atoms, $R^1$ and $R^2$ may each be an alkyl group having 1 to 4 carbon atoms or hydrogen, independently of one another, or $R^1$ and $R^2$ may together denote an alkylene group having 4 or 5 carbon atoms, and a may assume the value 0 or 1,
   (4) from 5 to 250 parts by weight of a reinforcing filler or a non-reinforcing filler or a filler mixture,
   (5) from 0.01 to 1 part by weight of a tin catalyst and
   (6) from 0.05 to 2.5 parts by weight of an aminoalkyl alkoxy silane containing one or more basic nitrogen atoms attached to the silicon by at least 3 carbon atoms,

   characterised in that from 0.05 to 2.5 parts by weight of an auxiliary substance (7) for accelerating cross-linking is used, which auxiliary substance is (7) is selected from
   a) alkyl or alkenyl carboxylic acids having up to 20 carbon atoms and optionally substituted and
   b) silane derivatives of such carboxylic acids having the following composition

$$R^3{}_b\ Si(O\overset{\overset{O}{\|}}{C} - R^4)4\text{-}b,$$

   wherein $R^3$ denotes alkyl or alkenyl groups with up to 4 carbon atoms, $R^4$ corresponds to the definition given under a) and b may assume the values from 0 to 3.

2. Compound according to Claim 1, characterised in that the oximinosilane (3) used is $CH_3Si[ON = C-(C_2H_5)CH_3]_3$.

3. Compound according to Claim 2, characterised in that the aminoalkyl alkoxy silane (6) used is $H_2N\ CH_2CH_2CH_2\ Si(OC_2H_5)_3$ or $H_2N\ CH_2CH_2CH_2\ Si(OCH_3)_3$.

4. Compound according to Claim 2, characterised in that the aminoalkyl alkoxy silane (6) used is $H_2N\ CH_2CH_2\ NH\ CH_2CH_2CH_2Si(OCH_3)_3$.

5. Compound according to Claim 3 or 4, characterised in that the additive used for accelerating cross-linking is 2-ethylhexanoic acid.

6. Compound according to Claim 3 or 4, characterised in that the additive used for accelerating cross-linking is

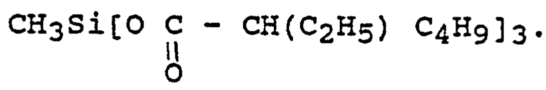

## Revendications

1. Compositions de polyorganosiloxanes stables à l'abri de l'humidité et durcissant au contact de l'humidité, pouvant être obtenues par mélange
   (1) de 100 parties en poids d'un α,ω-dihydroxypolydiméthylsiloxane ayant une viscosité comprise entre 0,1 et 1000 Pa.s,
   (2) de 0 à 100 parties en poids d'un α,ω-bis(triméthylsiloxy)polydiméthylsiloxane ayant une viscosité comprise entre 0,01 et 10 Pa.s comme plastifiant,
   (3) de 1 à 10 parties en poids d'un oximinosilane de composition

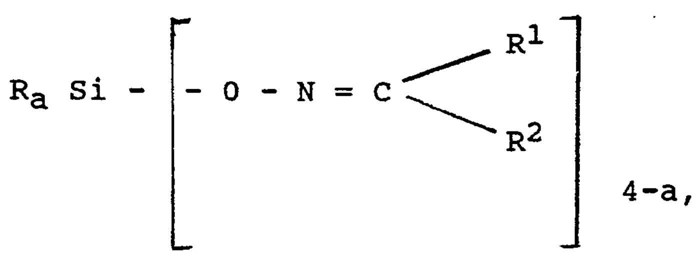

   dans laquelle R représente des restes alkyle ou alcényle ayant 1 à 4 atomes de carbone, $R^1$ et $R^2$ peuvent représenter chacun, indépendamment l'un de l'autre, un reste alkyle ayant 1 à 4 atomes de carbone ou l'hydrogène ou bien $R^1$ et $R^2$ forment conjointement un reste alkylène ayant 4 ou 5 atomes de carbone et a a les valeurs 0 ou 1,
   (4) de 5 à 250 parties en poids d'une charge produisant ou non un renforcement ou d'un mélange de charges,
   (5) de 0,01 à 1 partie en poids d'un catalyseur á l'étain et
   (6) de 0,05 à 2,5 parties en poids d'un aminoalkylalkoxysilane qui contient un ou plusieurs atomes d'azote basiques liés par l'intermédiaire d'au moins 3 atomes de carbone avec le silicium,
   caractérisée en ce qu'on utilise 0,05 à 2,5 parties en poids d'une substance auxiliaire (7) accélérant la réticulation, qui est choisie dans la série :
   a) des acides alkyl- ou alcénylcarboxyliques ayant jusqu'à 20 atomes de carbone, qui peuvent être substitués le cas échéant, et
   b) des dérivés de silane de ces acides carboxyliques de composition

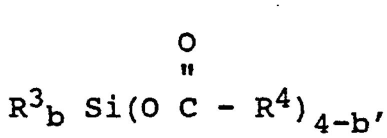

dans laquelle $R^3$ désigne des restes alkyle ou alcényle ayant jusqu'à 4 atomes de carbone, $R^4$ a la définition donnée en a) et b peut prendre les valeurs de 0 à 3.

2. Composition suivant la revendication 1, caractérisée en ce qu'on utilise comme oximinosilane (3) le composé $CH_3Si[ON = C(C_2H_5)CH_3]_3$.

3. Composition suivant la revendication 2, caractérisée en ce qu'on utilise comme amino-alkylalkoxysilane (6) le composé $H_2NCH_2CH_2CH_2Si(OC_2H_5)_3$ ou $H_2NCH_2CH_2CH_2Si(OCH_3)_3$.

4. Composition suivant la revendication 2, caractérisée en ce qu'on utilise comme amino-alkylalkoxysilane (6) le composé $H_2NCH_2CH_2NHCH_2CH_2CH_2Si(OCH_3)_3$.

5. Composition suivant la revendication 3 ou 4, caractérisée en ce qu'on utilise l'acide 2-éthylhexanoïque comme additif accélérant la réticulation.

6. Composition suivant la revendication 3 ou 4, caractérisee en ce qu'on utilise le composé

$$CH_3Si[O\underset{\underset{O}{\|}}{C} - CH(C_2H_5)\ C_4H_9]_3$$

comme additif accélérant la réticulation.